# EUROPÄISCHE PATENTSCHRIFT

(11) **EP 1 454 519 B1**
(45) Veröffentlichungstag und Bekanntmachung des Hinweises auf die Patenterteilung: **02.06.2010**
(21) Anmeldenummer: 04002014.1
(22) Anmeldetag: 30.01.2004
(51) Int. Cl.: A01D 43/08, A01D 41/127

(54) **Verfahren und Vorrichtung zur Ermittlung von Erntegutparametern**
Method and device for determination of crop parameters
Procede et dispositif pour determiner des parametres des produits agricoles recoltes

(30) Priorität: 17.02.2003 DE 10306725
(43) Veröffentlichungstag der Anmeldung: 08.09.2004
(73) Patentinhaber: CLAAS Selbstfahrende Erntemaschinen GmbH, 33428 Harsewinkel (DE)
(72) Erfinder: Quincke, Gunnar, 59494 Soest (DE); Buhne, Hubert, 48324 Sendenhorst (DE)

(56) Entgegenhaltungen:
- EP-A- 0 843 959
- EP-A- 0 908 086
- EP-A- 0 938 838
- DE-C- 10 236 515
- US-B1- 6 389 884

## Beschreibung

Die Erfindung bezieht sich auf ein Verfahren und eine Vorrichtung zur Ermittlung von Erntegutparametern in einer landwirtschaftlichen Erntemaschine, mit einer während des Arbeitsprozesses mit einer Erntegutprobe befüllbaren Verdichtungseinrichtung.

Es ist bekannt Erntegutparameter, wie beispielsweise den Trockenmassengehalt, die Gutfeuchte, den Eiweißgehalt, den Proteingehalt u.a. stationär anhand einer Gutprobe in Einrichtungen eines Labors bestimmen zu lassen. Es besteht jedoch zunehmend der Bedarf, die Bestimmung der Erntegutparameter im laufenden Arbeitsbetrieb der Erntemaschine direkt und schnell durchführen zu können. Hierzu ist der Einsatz von Sensoren an Erntemaschinen zur Ermittlung beispielsweise der Erntegutfeuchte während des Arbeitsbetriebes bekannt. Den verwendeten Sensoren wird hierfür eine vom Erntegutstrom abgezweigte Gutprobe zur Messung zugeführt. Ferner ist die Verwendung von berührungslos arbeitenden Sensoren oder auch Sensoren die direkt in den Erntegutstrom eingebracht werden bekannt.

Aus der EP 0938838 ist ein Verfahren gemäß dem Oberbegriff von Anspruch 1 bekannt.

Aus der EP 0 931 446 A1 ist eine Messvorrichtung zur Bestimmung erntegut- und/oder förderspezifischer Parameter an einer landwirtschaftlichen Erntemaschine bekannt. Entlang des Förderwegs ist innerhalb der Erntemaschine eine Messeinrichtung angeordnet, welche direkt in den Erntegutstrom eingreift und aus dem direkten Kontakt mit dem geförderten Erntegut ein Parameter des Erntegutes, wie beispielsweise die Gutfeuchte bestimmt. Der Erntegutstrom wirkt direkt auf die Sensorelemente der Messeinrichtung ein, wodurch eine durchsatzabhängige Kontaktkraft des Erntegutes auf die Sensorelemente entsteht. Die Ermittlung eines Parameters mittels der vorgeschlagenen Messeinrichtung wird daher stark in Abhängigkeit vom Erntegutdurchsatz beeinflusst. Eine präzise und zuverlässige Ermittlung von Parametern ist nicht möglich.

Aufgabe der Erfindung ist es daher, eine Einrichtung zu entwickeln, die eine zuverlässige und genaue Bestimmung von Erntegutparametern im laufenden Erntebetrieb der Erntemaschine möglich macht.

Diese Aufgabe wird durch ein Verfahren mit den kennzeichnenden Merkmalen nach Anspruch 1 gelöst. Durch dieses Verfahren wird für die Messung wenigstens eines Erntegutparameters in einer Verdichtungseinrichtung durch eine definierte Vorverdichtung eine homogene Erntegutprobe erzeugt. Die Messung des wenigstens einen Erntegutparameters kann vorteilhaft unter reproduzierbaren Messbedingungen durchgeführt werden. Insbesondere werden die die bekannten Messeinrichtungen in der Erntemaschine beeinflussenden Größen, wie Dichteschwankungen sowie unterschiedliche Erntegutstrukturen vorteilhaft ausgeschlossen beziehungsweise erfasst und nunmehr eine genaue beziehungsweise zuverlässige Ermittlung von Erntegutparametern möglich. Durch die definierte Vorverdichtung werden insbesondere die bei sperrigem Erntegut vorhandenen Lufteinschlüsse auf ein Minimum reduziert.

In einer ersten Ausgestaltung der Erfindung enthält die Verdichtungseinrichtung wenigstens ein bewegliches Verdichtungsorgan und die definierte Vorverdichtung der Erntegutprobe wird anhand der von dem Verdichtungsorgan in die Erntegutprobe eingeleiteten Verdichtungskraft ermittelt. Eine derartig ausgeführte Verdichtungseinrichtung ermöglicht einen einfachen, kostengünstigen Aufbau sowie die Verwendung bekannter Mittel zur Verdichtung und zur Ermittlung der definierten Vorverdichtung der Erntegutprobe. Insbesondere wird durch wenigstens ein bewegliches Verdichtungsorgan eine aktive Förderung des Erntegutes und eine aktive Reinigung der Verdichtungseinrichtung innerhalb der Verdichtungseinrichtung ermöglicht.

Die definierte Vorverdichtung, die von dem Verdichtungsorgan in die zu verdichtende Erntegutprobe eingeleitet wird, ist vorteilhaft in Abhängigkeit von dem zu sensierenden Erntegut einstellbar. Hierdurch kann die definierte Vorverdichtungskraft und die in das Erntegut eingeleitetet Verdichtungskraft an unterschiedliche Erntegüter, zum Beispiel an die unterschiedlichen Erntegutstrukturen bei unterschiedlichen Häcksellängen angepasst werden. Eine reproduzierbare und homogene Erntegutprobe in der Verdichtungseinrichtung kann vorteilhaft in Verbindung mit den unterschiedlichen Erntegütern erzeugt werden, wobei insbesondere störende Lufteinschlüsse ausgeschlossen werden.

In einer besonderen Weiterbildung der Erfindung ist der wenigstens eine Erntegutparameter, das Volumen der Erntegutprobe. Durch die definierten Vorverdichtung der Erntegutprobe werden Hohlräume, d.h. Lufteinschlüsse weitgehend ausgeschlossen und das ermittelte Volumen der Erntegutprobe stellt somit ein aussagefähiger vergleichbarerer Parameter der Erntegutprobe dar. So kann beispielsweise die Masse einer Erntegutprobe einmalig bestimmt und bei gleichbleibender Erntegutart und Erntegutstruktur, anhand der Ermittlung lediglich des Volumens, die Masse weiterer Erntegutproben ermittelt werden. Das Volumen ermöglicht somit eine Normierung von weiteren Ermittlung oder Korrektur weiter Erntegutparameter in der Erntemaschine.

In einer Weiterbildung der Erfindung ist der wenigstens eine Erntegutparameter die Masse der Erntegutprobe. Die ermittelte Masse dient in vorteilhafter Weise der Korrektur eines weiteren von der Masse abhängigen zu ermittelten Erntegutparameters der Erntegutprobe oder des Erntegutes.
Die Masse wird vorteilhaft zur weiteren Verwendung in weiteren Einrichtungen der Erntemaschine verfügbar bereitgestellt und ermöglicht in Verbindung mit dem bekannten Volumen der Erntegutprobe, in einer Weiterbildung der Erfindung, die Berechnung der Dichte der Erntegutprobe. Aus der ermittelten Dichte lässt sich vorteilhaft die Zerkleinerungswirkung einer Häckseleinrichtung in der Erntemaschine feststellen. So lassen sich anhand eines Vergleichs der aktuellen Erntegutprobendichte mit einer zuvor gemessenen und gespeicherten Dichte weiterer Erntegutproben, Ernteguteigenschaften sowie das Arbeitsergebnis der Häckseleinrichtung der Erntemaschine überwachen. Aus einer Verringerung der Dichte der Erntegutprobe lässt sich beispielsweise vorteilhaft eine Verschlechterung der Zerkleinerungswirkung der Häckseleinrichtung ableiten.

Der wenigstens eine Erntegutparameter ist, in einer Weiterbildung der Erfindung, ein Feuchtewert der Erntegutprobe wobei dieser anhand der Dichte der Erntegutprobe korrigiert wird. Durch die Verdichtung der Erntegutprobe in der Verdichtungseinrichtung auf eine definierte Vorverdichtung, wird vorteilhaft eine definierte Kontaktkraft des Erntegutes auf einen Feuchtesensor bewirkt. Hierdurch kann eine Kalibrierung des Feuchtesensors durchgeführt sowie miteinander vergleichbare Messergebnisse erzielt werden. Weiterhin wird in Verbindung mit der Ermittlung der Dichte der Erntegutprobe, eine Korrektur insbesondere des volumenabhängigen Feuchtewertes eines kapazitiven Feuchtesensors möglich. Der sensierte Feuchtewert kann anhand des Volumens der Erntegutprobe normiert werden. Der erfolgreiche Einsatz eines kapazitiven Feuchtesensors an einer Erntemaschine mit verwertbaren Meßergebnissen wird hierdurch erstmalig möglich.

In einer weiteren Ausgestaltung der Erfindung wird ein mit der Erntegutprobe in Verbindung stehender Parameter, wie Vorverdichtung, Volumen, Masse, Dichte oder Feuchte der Erntegutprobe und/oder des Erntegutes, zur Korrektur oder Ermittlung von wenigstens einem weiteren in der Erntemaschine ermittelten Erntegutparameter verwendet wird. Die durch die Erntegutprobennahme in Verbindung mit der Verdichtungseinrichtung ermittelten Parameter der Erntegutprobe oder des Erntegutes können vorteilhaft durch bekannte Sensoren ermittelt und von weiteren Einrichtungen in der Erntemaschine verwendet werden. Der Aufwand an speziellen Sensoreinrichtungen zur Ermittlung von Erntegutparametern in einer Erntemaschine kann hierdurch verringert werden.

So ist es in einer Weiterbildung der Erfindung vorgesehen, dass in der Erntemaschine eine Ertragsmesseinrichtung vorhanden ist und der von der Ertragsmesseinrichtung ermittelte Erntegutdurchsatz und/oder Erntegutertrag unter Berücksichtigung der ermittelten Dichte der Erntegutprobe erfolgt. Die Ertragsermittlung an Erntemaschinen beruht in der Regel auf einer Bestimmung des durchlaufenden Erntegutvolumens. Eine Umrechnung auf die Erntegutmasse erfolgte bisher anhand einer fest vorgegebenen Erntegutdichte. Die automatische Ermittlung der Dichte und deren Einbeziehung bei der Ertragsermittlung erbringt eine enorme Verbesserung der Genauigkeit des Ertragsmesssystems und vermeidet ferner manuelle Fehleinstellungen am System. Weiterhin werden vorteilhaft die notwendigen manuellen Kalibierarbeiten eines Bedieners an dem Ertragsmesssystem auf ein Minimum reduziert.

In einer weiteren Ausgestaltung der Erfindung ist die landwirtschaftliche Erntemaschine ein Feldhäcksler mit wenigstens einer Einzugs- und einer auslenkbar gelagerten Vorpresswalze und enthält wenigstens eine Feder zur Verdichtung des zwischen der wenigstens einen Einzugs- und Vorpresswalze geförderten Erntegutes, wobei anhand der Auslenkung der wenigstens einen Vorpresswalze der Erntegutdurchsatz durch die Erntemaschine ermittelt, während des Verdichtungsprozesses der Erntegutprobe in der Verdichtungseinrichtung, die Verdichtungskraft und das zugehörige Volumen der Erntegutprobe ermittelt, wenigstens ein Verhältnis zwischen der Verdichtungskraft und dem Volumen ermittelt und das wenigstens eine Verhältnis bei der Ermittlung des Erntegutdurchsatzes berücksichtigt wird. Die Vorverdichtung des Erntegutes im Einzugsaggregat eines Feldhäckslers ist von der erntgutdurchsatzabhängigen Auslenkung der Vorpresswalzen abhängig. Dieser Auslenkung wirkt wenigstens eine Feder entgegen und bewirkt somit eine in Abhängigkeit von der Auslenkung abhängige unterschiedliche Vorverdichtung des Ernteguts. Weiterhin wird die Auslenkungen der Vorpresswalze durch unterschiedliche Erntegutarten sowie Erntegüter mit unterschiedlichen Erntegutstrukturen, durch die von der Vorpresswalze unterschiedlich erzeugte Verdichtung beeinflusst.
Aus dem ablaufenden Verdichtungsprozess der Erntegutprobe, kann ein Verhältnis zwischen Volumen und Verdichtungskraft gewonnenen werden. Dieses Verhältnis wird vorteilhaft zur Korrektur beziehungsweise Normierung des ermittelten Erntegutdurchsatzes verwendet und führt zu einer Verbesserung der Genauigkeit der Erntegutdurchsatzermittlung.

In einer besonderen Ausgestaltung der Erfindung führt während der Befüllung der Verdichtungseinrichtung, das Verdichtungsorgan eine mit einer verringerten Verdichtungswirkung oszillierende Bewegung aus, bis eine definierte Vorverdichtung der Erntegutprobe erreicht ist. Dieses Befüllverfahren ermöglicht vorteilhaft vor jeder entgültigen Verdichtung der Erntegutprobe auf eine definierte Vorverdichtung, einen in etwa gleiche Befüllung der Verdichtungseinrichtung. Es wird weiterhin sichergestellt, dass auch unterschiedliche Erntegüter mit unterschiedlichen Fördereigenschaften in ausreichender Menge in die Verdichtungseinrichtung gelangen.

Die Aufgabe der Erfindung wird ferner durch eine Vorrichtung gelöst, die dadurch gekennzeichnet ist, dass wenigstens ein Sensor zur Ermittlung einer definierten Vorverdichtung der in der Verdichtungseinrichtung befindlichen Erntegutprobe vorhanden ist.

Es lässt sich durch diesen Sensor vorteilhaft die Vorverdichtung überwachen wodurch homogene Erntegutproben mit gleichen Verdichtungen erzeugt werden können. Die Erntegutparameter werden dann unter gleichen Messbedingungen ermittelt und sind somit vorteilhaft vergleichbar.

In einer Ausgestaltung der Erfindung besteht die Verdichtungseinrichtung aus wenigstens einer Probenkammer und einem darin beweglichen Verdichtungskolben und die von dem Verdichtungskolben aufgebrachte Verdichtungskraft wird von wenigstens einem Drucksensor ermittelt. Die Verwendung eines Verdichtungskolben in einer Probenkammer zur Erzeugung der definierten Vorverdichtung ermöglicht die Verwendung eines kostengünstigen Stellantriebs zur Bewegung des Verdichtungsorgans. Ferner können bekannte Sensoren zur Ermittlung der definierten Vorverdichtung eingesetzt werden. Die Höhe der Verdichtungskraft, die der Verdichtungskolbens in die Erntegutprobe einleitet wird vorteilhaft von einem Drucksensor sensiert, wobei der Druckwert dann ein repräsentatives Maß für die Vorverdichtung der Erntegutprobe in der Verdichtungseinrichtung ist. Derartige Drucksensoren sind an Antrieben für Verdichtungskolben bekannt, worauf vorteilhaft zurückgegriffen werden kann. Vielfach sind auch derartige Drucksensoren serienmäßig in den Antrieben integriert oder deren Einbau schon optional vorgesehen

In einer weiteren Ausgestaltung der Erfindung wird die Stellung des Verdichtungskolbens in der Probenkammer von wenigstens einem Lagesensor erfasst. Anhand der ermittelten Lage kann vorteilhaft das Volumen der in der Probenkammer vorhandenen Erntegutprobe in Verbindung mit den bekannten Abmessungen der Probenkammer berechnet werden. Eine vorhandene Probensteuerung kann ferner anhand der sensierten Verdichtungskolbenlage feststellen, ob die Öffnung zur Befüllung der Probenkammer offen oder verschlossen ist und hieran den Befüllungsprozess von einem Verdichtungsprozess unterscheiden. Weiterhin kann nunmehr anhand der bekannten Lage des Verdichtungskolbens in der Probenkammer, die Relation zwischen Volumen und Vorverdichtung der Erntegutprobe von der Probensteuerung überwacht und während dem Verdichtungsprozess in eine Speichereinrichtung aufgezeichnet werden.

In einer besonderen Ausgestaltung der Erfindung wird die Erntegutprobe unmittelbar durch eine Öffnung aus dem Erntegutstrom in der Erntemaschine in die Verdichtungseinrichtung geleitet. Störanfällige Zwischenförderer können hierdurch vollständig entfallen, wodurch eine ständige Verfügbarkeit der Vorrichtung im Arbeitsbetrieb gewährleistet wird.
Die landwirtschaftliche Erntemaschine ist vorteilhaft ein Feldhäcksler mit einer Häckseltrommel und einem daran befindlichen gutumlenkenden Trommelboden und die Öffnung ist an dem gutumlenkenden Trommelboden angeordnet. In einer Häckseltrommel eines Feldhäckslers findet durch die darin rotierenden Messer eine aktive Förderung des Erntegutes statt. Die Anordnung der Öffnung an dem gutumlenkenden Trommelboden bewirkt eine sichere Entnahme von Erntegut aus der Häckslertrommel. Es wird hierbei die während der Entnahme der Erntegutprobe ausbleibende Gutumlenkung an der offenen Öffnung, zur Förderung der Erntegutprobe in die Probenkammer ausgenutzt. In Verbindung mit der aktiven Förderung in der Häckseltrommel, findet vorteilhaft eine ständige Nachförderung zur Öffnung sowie eine Reinigung der Entnahmestelle statt. Eine bleibende Störung des Gutflusses sowie eine Gutansammlung durch die Erntgutprobennahme wird durch die vorteilhafte Lage der Öffnung ausgeschlossen. Diese Vorteile ergeben sich auch, wenn die landwirtschaftliche Erntemaschine ein Mähdrescher mit einem Strohhäcksler und einem daran befindlichen gutumlenkenden Führungsboden ist und die Öffnung an dem gutumlenkenden Führungsboden angeordnet ist.

In einer weiteren Ausgestaltung der Erfindung wird die Erntegutprobe aus der Verdichtungseinrichtung mittels des beweglichen Verdichtungsorgans in den Erntegutstrom der Erntemaschine zurückgeführt. Die Erntegutprobe geht hierdurch nicht verlustig und ein sauberes Bearbeitungsfeld wird hinterlassen.

In einer Weiterbildung der Erfindung ist die Probenkammer und die Bewegungsrichtung des Verdichtungskolbens in etwa in Förderrichtung des Erntegutes im Bereich der Öffnung ausgerichtet. Hierdurch werden Stauungen und eine starke Gutumlenkung bei der Befüllung der Probenkammer verhindert und die vorhandene Bewegung des Erntegutes zur Befüllung der Probenkammer vorteilhaft ausgenutzt. Weiterhin ist hierdurch eine flache Bauform gegeben.

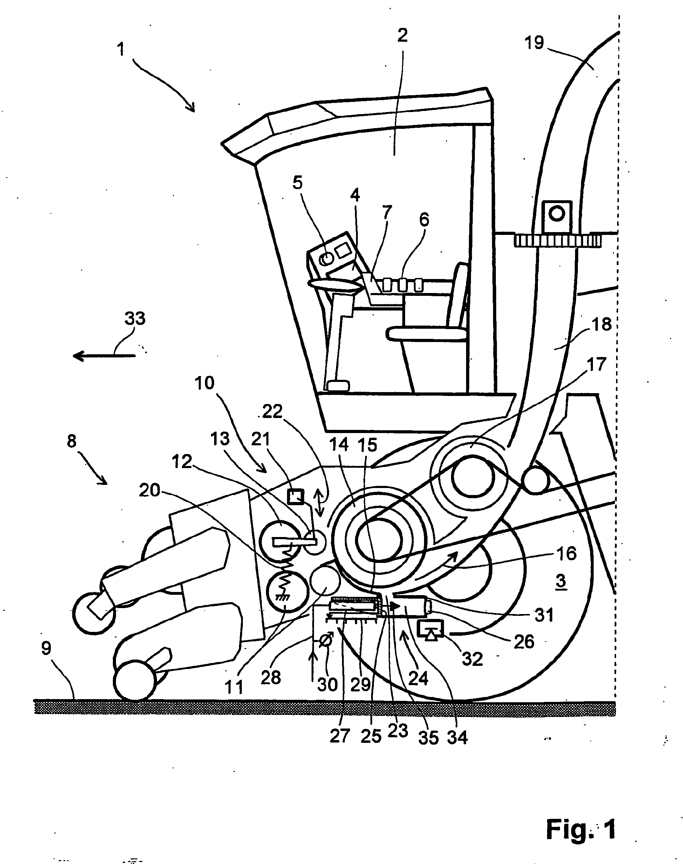

Anhand eines Ausführungsbeispiels, nach Figur 1, soll die Erfindung näher erläutert werden. Dabei zeigt die Figur 1 einen in Fahrtrichtung 33 vorderen Teil einer Seitenansicht eines Feldhäcksler 1 mit einer Fahrerkabine 2 und einem gezeigten Antriebsreifen 3. In der Fahrerkabine 2 ist eine Anzeigeeinrichtung 4 und wenigstens eine Einstelleinrichtung 5 sowie sind weitere Bedienelemente für den Betrieb des Feldhäckslers 1, wie Schalter 6 und der Fahrhebel 7, dargestellt. Der gezeigte Feldhäcksler 1 ist mit einem Vorsatzgerät 8 ausgerüstet, mittels welchem der Feldhäcksler 1 nicht dargestelltes Erntegut von dem Feldboden 9 aufnimmt und an das nachgeschaltete Einzugsaggregat 10, auf dessen Breite zusammengeführt, abgibt. Innerhalb des Einzugsaggregates 10 sind zwei angetriebene untere Einzugswalzen 11 und zwei angetriebene obere beweglich gelagerte Vorpresswalzen 12;13 angeordnet. Das dem Einzugsaggregat 10 zugeführte Erntegut wird zwischen den Einzugswalzen 11 und den Vorpresswalzen 12;13 durch die von wenigstens einer Feder 20 auf die Vorpresswalzen 12;13 erzeugten Kraft vorverdichtet und an die nachfolgende Häckseltrommel 14 übergeben. Die rotierende Häckseltrommel 14 häckselt das Erntegut und fördert es aktiv entlang des Trommelbodens 15 in Förderrichtung 16 zu einem Nachbeschleuniger 17. Das Erntegut wir dort nachbeschleunigt und durch den Austragschacht 18 sowie dem nachgeordneten Auswurfkrümmer 19 in einen nicht dargestellten Transportbehälter überladen,
Der gezeigte Feldhäcksler 1 ist mit einer dem Fachmann bekannten Ertragsmesseinrichtung ausgestattet, wobei in der Figur 1 nur der Spaltsensor 21 zur Ermittlung des Abstandes zwischen der hinteren Einzugswalze 11 und der hinteren Vorpresswalze 13 gezeigt ist. Die von der vorgepressten Erntegutschicht erzeugte Auslenkung 22 der hinteren Vorpresswalze 13 wird von einer nicht näher dargestellten Auswerteeinrichtung in Verbindung mit der Breite des Einzugsaggregates 10 und der Erntegutgeschwindigkeit zu einem Erntedurchsatzvolumen verrechnet. Aus dem geförderten Erntegutvolumen kann in Verbindung mit der Dichte des Erntegutes ein Erntegutdurchsatz in t/h berechnet werden.

An dem Trommelboden 15 ist eine erfindungsgemäße Verdichtungseinrichtung 24, welche nach dem erfindungsgemäßen Verfahren arbeitet, angeordnet. Eine Anbringung der Verdichtungseinrichtung 24 an einem Führungsboden eines Strohhäcksler in einem Mähdrescher liegt im Rahmen der Erfindung und bedarf, durch die für eine Fachmann naheliegende direkte Übertragbarkeit, keiner weiteren näheren Erläuterung. Weiterhin liegt es im Rahmen der Erfindung, wenn die Befüllung der Verdichtungseinrichtung 24 während des Arbeitsprozesses manuell ausgelöst oder erfolgt.

Die gezeigte Verdichtungseinrichtung 24 beinhaltet einen Verdichtungskolben 25, welcher in einer Probenkammer 34 beweglich angeordnet ist. Die Probenkammer 34 ist in Fahrtrichtung 33 des Feldhäckslers 1, welche in etwa der Ausrichtung des Erntegutstroms entlang des Trommelbodens 15 entspricht, ausgerichtet, wobei die Förderrichtung 16 des Erntegutes entgegengesetzt der Fahrtrichtung 33 ist. Die Verdichtungs-/und Bewegungsrichtung des Verdichtungskolbens 25 innerhalb der Probenkammer 34 entspricht bauartbedingt der Ausrichtung der Probenkammer 34.
Der Trommelboden 15 ist gutumlenkenden ausgebildet und beinhaltet eine Öffnung 23. Durch diese wird im Arbeitsbetrieb des Feldhäckslers 1, die Probenkammer 34 mit gehäckseltem Erntegut befüllt. Diese Öffnung 23 selbst wird von dem Verdichtungskolben 25, in der gezeigten Stellung, zur Entnahme einer Erntegutprobe aus der Häckseltrommel 14 geöffnet. Durch die Öffnung 23 gelangt nun von der Häckslertrommel 14 gehäckseltes Erntegut durch die im Bereich der Öffnung 23 ausbleibende Erntegutumlenkung, die wirkende Zentrifugalkraft und die aktive Förderung durch die Häckseltrommel 14 direkt in die Probenkammer 34.
Durch eine Bewegung des Verdichtungskolbens 25, in Verbindung mit der gezeigten Ausbildung des Verdichtungskolbens 25, in Richtung der am gegenüberliegenden Ende der Probenkammer 34 angeordneten Sensoreinrichtung 26, wird die Öffnung nach einer gewissen Zeit geschlossen. Ein separater, gesteuerter Schieber an der Öffnung 23 sowie ein Zwischenfördermittel zur Befüllung der Probenkammer 34 liegen im Rahmen der Erfindung und werden von dieser mit erfasst. Ferner kann die Öffnung 23 auch im aktiven Förderbereich des Nachbeschleuniger 17 angeordnet sein
Die Bewegung des Verdichtungskolbens 25 innerhalb der Probenkammer 34 wird von einem hier verwendeten gesteuerten Hubzylinder 27 ausgeführt. Eine nicht näher gezeigte dem Fachmann jedoch bekannte elektrohydraulische Steuereinrichtung bewirkt auf Befehl einer weiterhin nicht näher dargestellten übergeordneten Probensteuerung, über die schematisch dargestellte Leitung 28, die Zuführung einer Ölmenge zu dem Hubzylinder 27 und führt hierdurch eine Bewegung des Verdichtungskolbens 25 aus der gezeigten hinteren Endlage herbei. Die Stellung des Verdichtungskolbens 25 in der Probenkammer 34 wird durch einen Lagesensor 29 erfasst und von der Probensteuerung abgefragt. Anhand der Stellung des Verdichtungskolbens 25 in der Probenkammer 34 kann in Verbindung mit den bekannten Abmessungen der Probenkammer 34, für jede Lage des Verdichtungskolbens innerhalb der Probenkammer 34, ein Volumen der Erntegutprobe ermittelt werden.

Die Ermittlung der Vorverdichtung der Erntegutprobe kann durch wenigstens einen geeigneten dem Fachmann bekannten Sensor, beispielsweise durch einen Druck-/Kraft-/ oder Dichtesensor erfolgen. Dabei kann der Sensor in der Probenkammer 34 angeordnet sein oder beispielsweise durch die Sensoreinrichtung 26 selbst gebildet werden. In der dargestellten Figur 1 wird der in der Leitung 28 anstehende Druck durch einen Drucksensor 30 erfasst und an die Probensteuerung gemeldet. Anhand des sensierten Drucks, wird die in die Erntegutprobe eingeleitete Verdichtungskraft 35 dann repräsentativ für die definierte Vorverdichtung der Erntegutprobe ermittelt. Der Sensor 30 kann ferner auch am Presskolben 25 oder am Hubzylinder 27 oder an dessen Zuleitung 28 angeordnet sein.
Die Probensteuerung steht ferner mit der Einstelleinrichtung 5, der Anzeigeeinrichtung 4 und wenigstens einem Schalter 6 in der Fahrerkabine 2 in Verbindung. Hiermit kann die Aktivierung der Probennahme vorgenommen, die Vorgabe einer Erntegutart beziehungsweise die Stellung des Verdichtungskolbens 25 für den nachfolgend erklärten verkürzten Hub des Verdichtungskolbens 25 beziehungsweise den Entleerungshub oder die Schwellwerte für die Befüll- und definierten Vorverdichtung eingestellt werden. Erfindungsgemäß können Schwellwerte für unterschiedliche Verdichtungen, durch die Einstelleinrichtung 5 eingestellt oder aus einer Speichereinrichtung ausgewählt werden und so die Verdichtungseinrichtung 24 an die unterschiedlichen Erntegüter und deren Verdichtungseigenschaften angepasst werden. Zur Vermeidung von Lufteinschlüssen und zur Erzielung einer homogenen Erntegutprobe werden sperrige Erntegüter, wie längeres oder älteres Gras sowie Stroh, bis hin zu einer größeren definierten Verdichtungskraft 35 vorverdichtet.
Über die Anzeigeeinrichtung 4 können der aktuelle Verfahrensablauf und die eingestellten sowie ermittelten Parameter der Probennahme beziehungsweise der Erntegutprobe dem Bediener des Feldhäckslers 1 visualisiert werden.

Von der Probensteuerung wird der erfindungsgemäße Ablauf der Ermittlung eines Erntegutparameters automatisch gesteuert. Anhand der von dem Lagesensor 29 angezeigten Stellung des Verdichtungskolbens 25 wird eine Befüllung der Probenkammer 34 mit Erntegut erkannt. Hierfür kann die Probensteuerung diese Stellung des Verdichtungskolbens 25, nach beispielsweise einer manuellen Aktivierung der Probennahme durch den Schalter 6, zunächst automatisch herbeiführen. Während der Befüllung ist es erfindungsgemäß vorgesehen, dass der Verdichtungskolben 25 eine verkürzten Hub oszillierend ausführt. Hierdurch wird das sich schon in der Probenkammer 34 unterhalb der Öffnung 23 befindliche Erntegut weiter in die Probenkammer 34 gedrückt und die Öffnung 23 für nachfolgendes Erntegut freigeräumt. Während dem verkürzten Hub des Verdichtungskolbens 25, wird der Hubzylinder 27 von der Probensteuerung nur bis an eine vorgegebene Stellung, beispielsweise bis das die Öffnung 23 von dem Verdichtungskolben 25 verschlossen wird, bewegt und dann in die gezeigte Endlage zurückverfahren. Von der Probensteuerung wird beim Freiräumen weiterhin die Befüllverdichtung anhand der in die schon vorhandene Erntegutprobe eingeleitete Verdichtungskraft 35 überwacht. Tritt während dem verkürzten Hub eine Verdichtungskraft 35 oberhalb eines vorgegebenen Schwellwertes auf, wird der Befüllvorgang beendet. In der Probenkammer 34 befindet sich nun eine für die Ermittlung des Erntegutparameters ausreichend vorverdichtete Erntegutprobe. Es ist selbstverständlich, dass während dem Befüllprozess der Probenkammer 34 ein geringerer Schwellwert (Befüllverdichtung) für die Verdichtungskraft 35 vorgewählt wird als bei der anschließenden endgültigen Verdichtung der Erntegutprobe auf die definierte Vorverdichtung. Von der Probensteuerung wird nun der Hubzylinder 27 erfindungsgemäß zur weiteren Verdichtung der Erntegutprobe angesteuert und der Verdichtungskolben 25 so weit in der Probenkammer 34 verfahren, bis das die definierte Vorverdichtung beispielsweise die durch einen zweiten Schellwerte in der Probensteuerung vorgegebene Verdichtungskraft 35 in die Erntegutprobe eingeleitet wird.
Während dem Verdichtungsprozess kann die Probensteuerung die Lage des Verdichtungskolbens 25 beziehungsweise das Volumen der Erntegutprobe und die Verdichtungskraft 35 ständig ermitteln und in einen in der Probensteuerung befindlichen Speicher als Wertepaare abspeichern. Aus den aufgezeichneten Messwerten wird das Verhältnis zwischen dem Volumen der Erntegutprobe und der Verdichtungskraft 35 ermittelt und ergibt dann eine entsprechende Kennlinie. Da das Volumen der vorverdichteten Erntegutprobe in der Probenkammer 34 nach jeder Erntegutprobennahme nicht gleich hoch ist, werden die aufgezeichneten Kennlinien jeweils auf einen Verhältniswert oder auf eine vorgegebene Verdichtung normiert. Hierdurch wird eine Vergleich von Kennlinien und ein Ablesen von Korrekturfaktoren möglich.
Die unterschiedlichen Eigenschaften, wie Erntegutfeuchte oder Erntegutstruktur, der Erntegüter sowie der Einsatz der Erntemaschine an unterschiedlichen Erntegutarten bewirken eine unterschiedliche Verdichtung und damit unterschiedliche Auslenkung 22 der Vorpresswalze 13. Der hierauf beruhende und ermittelte Erntegutdurchsatz kann erfindungsgemäß entsprechend korrigiert werden. Aus dem Verhältnis zwischen dem Volumen der Erntegutprobe und der Verdichtungskraft 35, kann auf die Komprimierbarkeit des momentan verarbeitenden Erntegutes rückgeschlossen werden und das Verhältnis zur Korrektur des aus der Spaltweite zwischen den Vorpress- und Einzugswalzen 11;12;13 abgeleiteten Erntegutdurchsatzes verwendet werden.

Zur Ermittlung des wenigstens einen Erntegutparameters der Erntegutprobe kann in der Verdichtungseinrichtung 24 eine hierfür geeignete Sensoreinrichtung 26 angeordnet werden. Beispielsweise ist an der hinteren Wand 31 der Probenkammer 34 diese Sensoreinrichtung 26 angebracht. Diese Sensoreinrichtung 26 kann zum Beispiel ein Feuchtesensor sein, der mittels des bekannten kapazitiven Meßverfahrens einen Feuchtewert der Erntegutprobe ermittelt. Der von dem Feuchtesensor ermittelte Werte wird in Bezug auf ein bekanntes Gutvolumen ermittelt. Für ein aussagefähiges Ergebnis ist es daher erforderlich, dass der Feuchtewert, der sich auf ein davon unterschiedliches Probenvolumen bezieht, entsprechend korrigiert wird. Aus dem erfindungsgemäß ermittelten Volumen der innerhalb der Probenkammer 34 befindlichen Erntegutprobe ist somit eine entsprechende Korrektur des von dem Feuchtesensor ermittelten Feuchtewertes möglich.
Als ein Erntegutparameter der Erntegutprobe kann erfindungsgemäß die Masse der Erntegutprobe ermittelt werden. Hierzu ist der Probenkammer 34 eine Wiegeeinrichtung 32 nachgeordnet. Die Erntegutprobe wird daher zur Ermittlung der Masse der Erntegutprobe, durch eine nunmehr von der Probensteuerung automatisch geöffnete hintere Wand 31 und mittels eines erweiterten Hubes des Hubzylinders 27 mit dem Verdichtungskolben 25, an die Wiegeeinrichtung 32 übergeben. Es liegt daher im Rahmen der Erfindung die Verdichtungseinrichtung 24 zur Bestimmung des Volumens zu verwenden und einen weiteren Erntegutparameter anschließend durch eine weitere Einrichtung, wie hier dargestellt, durch eine Wiegeeinrichtung 32, bestimmen zu lassen. Die Probenkammer 34 kann auch selbst als Wiegeeinrichtung 32 ausgebildet sein oder die Wiegeeinrichtung 32 selbst beinhalten. Hierzu wird die gesamte oder ein Teil der Probenkammer 34 mit der darin befindlichen Erntegutprobe gewogen. Nach der Verdichtung wird dann die hintere Wand 31 der Probenkammer 34 geöffnet und die Erntegutprobe von dem Verdichtungskolben 25 aus der Probenkammer 34 auf den Feldboden 9 ausgestoßen. Die Erntegutprobe kann ferner durch eine weiteren nicht dargestellten Schacht an den Erntgutstrom zurück übergeben werden. Hierzu kann eine Kolben/Zylindereinheit die Erntegutprobe durch ein weitere Öffnung, beispielsweise im Austragschacht 18, an den Erntegutstrom zurückgeben. Bei entsprechender Ausbildung des Hubzylinders 27 mit einem erweiterten Hubbereich, kann auch der Verdichtungskolben 25 die Erntegutprobe aus der Probenkammer 34 in den bestehenden Erntegutstrom im Feldhäcksler 1 fördern.

Die einzelnen erfindungsgemäß ermittelten Erntegutparameter können von einer bekannten Ertragskartierung miterfasst und insbesondere in Verbindung mit einer navigierten Position der Erntemaschine in ein Speichermittel aufgezeichnet werden.

Anhand der ermittelten Masse der Erntegutprobe lässt sich in Verbindung mit dessen ermittelten Feuchte, eine in der Erntegutprobe befindliche Wassermasse berechnen. Die exakte prozentuale Feuchte der Erntegutprobe kann hieraus bestimmt werden. Weiterhin ist die Bestimmung des Trockenmassengehaltes der Erntegutprobe nunmehr möglich. In Verbindung mit der bekannten Masse und des bekannten Volumens der Erntegutprobe, kann die Dichte der Erntegutprobe bestimmt werden. Diese Dichte ermöglicht erfindungsgemäß eine direkte Umrechnung beziehungsweise Korrektur des volumenabhängigen Feuchtewertes in den Wassermassengehalt der Erntegutprobe. Des weiteren kann die ermittelte Dichte in einer Ertragsmesseinrichtung, die beispielsweise auf einem sensierten Volumenwert basiert, zur Berechnung des Erntegutdurchsatzes beziehungsweise des Ertragswertes verwendet werden.

Es liegt im Rahmen der Erfindung das die Verdichtungseinrichtung 24 und die zugeordneten Sensoren 30 sowie die wenigstens eine Sensoreinrichtung 26, über bekannte Verbindungs- und Datenübertragungseinrichtungen mit der Probensteuerung und den weiteren Einrichtungen, wie zum Beispiel den in der Fahrerkabine 2 angeordneten Einrichtung 4,5,6,7, gekoppelt sind. Hierüber können ferner die einzelnen erfindungsgemäß ermittelten Erntegutparameter ausgetauscht und an weitere Einrichtungen in der Erntemaschine zur weiteren Verwendung übergeben werden. Ferner liegt es im Ermessen eines Fachmanns, das ausgeführte Beispiele an weiteren nicht genannten Erntemaschinen einzusetzen und durch alternativ verwendbare beziehungsweise weitere bekannte Sensoreinrichtungen weiter auszugestalten. Auch ist die Erfindung nicht auf die in dem Ausführungsbeispiel genannte Verdichtungstechnik mittels einer Kolben/Zylindereinrichtung beschränkt. Es liegt im Rahmen der Erfindung, die Erntegutprobe auch durch weitere dem Fachmann bekannte Verdichtungstechniken, wie zum Beispiel durch einen Schneckenverdichter, auf eine bestimmte Vorverdichtung zu bringen.

### Bezugszeichenliste:

- 1.: Feldhäcksler
- 2.: Fahrerkabine
- 3.: Antriebsräder
- 4.: Anzeigeeinrichtung
- 5.: Einstelleinrichtung
- 6.: Schalter
- 7.: Fahrhebel
- 8.: Vorsatzgerät
- 9.: Feldboden
- 10.: Einzugsaggregat
- 11.: Einzugswalzen
- 12.: Vordere Vorpresswalze
- 13.: Hintere Vorpresswalze
- 14.: Häckseltrommel
- 15.: Trommelboden
- 16.: Förderrichtung
- 17.: Nachbeschleuniger
- 18.: Austragschacht
- 19.: Auswurfkrümmer
- 20.: Feder
- 21.: Spaltsensor
- 22.: Auslenkung
- 23.: Öffnung
- 24.: Verdichtungseinrichtung
- 25.: Verdichtungskolben
- 26.: Sensoreinrichtung
- 27.: Hubzylinder
- 28.: Leitungen
- 29.: Lagesensor
- 30.: Drucksensor
- 31.: Hintere Wand
- 32.: Wiegeeinrichtung
- 33.: Fahrtrichtung
- 34.: Probenkammer
- 35.: Verdichtungskraft

## Patentansprüche

1. Verfahren zur Ermittlung von Emtegutparametem in einer landwirtschaftlichen Erntemaschine (1), mit einer während des Arbeitsprozesses mit einer Erntegutprobe befüllbaren Verdichtungseinrichtung (24), wobei
wenigstens ein Erntegutparameter der Erntegutprobe in Abhängigkeit von wenigstens einer von der Verdichtungseinrichtung (24) erzeugten definierten Vorverdichtung der Erntegutprobe ermittelt wird, **dadurch gekennzeichnet, dass** die definierte Vorverdichtung anhand der in die Erntegutprobe eingeleiteten Verdichtungskraft (35) ermittelt wird.

2. Verfahren nach Anspruch 1,
**dadurch gekennzeichnet, dass**
die Verdichtungseinrichtung (24) wenigstens ein bewegliches Verdichtungsorgan (25) enthält und die definierte Vorverdichtung der Erntegutprobe anhand der von dem Verdichtungsorgan (25) in die Erntegutprobe eingeleiteten Verdichtungskraft (35) ermittelt wird.

3. Verfahren nach wenigstens einem der Ansprüche 1 oder 2,
**dadurch gekennzeichnet, dass**
die definierte Vorverdichtung in Abhängigkeit von dem zu sensierenden Erntegut einstellbar ist.

4. Verfahren nach wenigstens einem der Ansprüche 1 bis 3,
**dadurch gekennzeichnet, dass**
der wenigstens eine Emtegutparameter, das Volumen der Erntegutprobe ist.

5. Verfahren nach wenigstens einem der Ansprüche 1 bis 4,
**dadurch gekennzeichnet, dass**
der wenigstens eine Emtegutparameter, die Masse der Erntegutprobe ist.

6. Verfahren nach wenigstens einem der Ansprüche 1 bis 5,
**dadurch gekennzeichnet, dass**
aus dem Volumen und der Masse der Erntegutprobe, die Dichte der Erntegutprobe ermittelt wird.

7. Verfahren nach wenigstens einem der Ansprüche 1 bis 6,
**dadurch gekennzeichnet, dass**
der wenigstens eine Erntegutparameter ein Feuchtewert der Erntegutprobe ist und dieser anhand der Dichte der Erntegutprobe korrigiert wird.

8. Verfahren nach wenigstens einem der Ansprüche 1 bis 7,
**dadurch gekennzeichnet, dass**
wenigstens ein mit der Erntegutprobe in Verbindung stehender Parameter, wie Vorverdichtung, Volumen, Masse, Dichte oder Feuchte der Erntegutprobe und/oder des Erntegutes, zur Korrektur oder Ermittlung von wenigstens einem weiteren in der Erntemaschine (1) ermittelten Erntegutparameter verwendet wird.

9. Verfahren nach wenigstens einem der Ansprüche 1 bis 8,
**dadurch gekennzeichnet, dass**
in der Erntemaschine (1) eine Ertragsmesseinrichtung vorhanden ist und der von der Ertragsmesseinrichtung ermittelte Erntegutdurchsatz und/oder Erntegutertrag unter Berücksichtigung der ermittelten Dichte der Erntegutprobe erfolgt.

10. Verfahren nach wenigstens einem der Ansprüche 1 bis 9,
**dadurch gekennzeichnet, dass**
die landwirtschaftliche Erntemaschine (1) ein Feldhäcksler mit wenigstens einer Einzugs- (11) und einer auslenkbar gelagerten Vorpresswalze (12;13) ist und wenigstens eine Feder (20) zur Verdichtung des zwischen der wenigstens einen Einzugs- und Vorpresswalze (12;13) geförderten Erntegutes enthält,
- anhand der Auslenkung (22) der wenigstens einen Vorpresswalze (12;13) der Erntegutdurchsatz durch die Erntemaschine (1) ermittelt,
- während des Verdichtungsprozesses der Erntegutprobe in der Verdichtungseinrichtung (24), die Verdichtungskraft (35) und das zugehörige Volumen der Erntegutprobe ermittelt,
- wenigstens ein Verhältnis zwischen der Verdichtungskraft (35) und dem Volumen ermittelt und
- das wenigstens eine Verhältnis bei der Ermittlung des Erntegutdurchsatzes berücksichtigt wird.

11. Verfahren nach wenigstens einem der Ansprüche 1 bis 10,
**dadurch gekennzeichnet, dass**
das Verdichtungsorgan (25) während der Befüllung der Verdichtungseinrichtung (24), eine mit einer verringerten Verdichtungswirkung oszillierende Bewegung ausführt, bis eine definierte Vorverdichtung der Erntegutprobe erreicht ist.

12. Vorrichtung zur Ermittlung von Erntegutparametern in einer landwirtschaftlichen Erntemaschine (1), mit wenigstens einer während des Arbeitsprozesses mit einer Erntegutprobe befüllbaren Verdichtungseinrichtung (24),
**dadurch gekennzeichnet, dass**
wenigstens ein Sensor (30) zur Ermittlung einer definierten Vorverdichtung der in der Verdichtungseinrichtung (24) befindlichen Erntegutprobe vorhanden ist.

13. Vorrichtung nach Anspruch 12,
**dadurch gekennzeichnet, dass**
die Verdichtungseinrichtung (24) aus wenigstens einer Probenkammer (34) und einem darin beweglichen Verdichtungskolben (25) besteht und die von dem Verdichtungskolben (25) aufgebrachte Verdichtungskraft (35) von wenigstens einem Drucksensor (30) ermittelt wird.

14. Vorrichtung nach wenigstens einem der Ansprüche 12 oder 13,
**dadurch gekennzeichnet, dass**
die Stellung des Verdichtungskolbens (25) in der Probenkammer (34) von wenigstens einem Lagesensor (29) erfasst wird.

15. Vorrichtung nach wenigstens einem der Ansprüche 12 bis 14,
**dadurch gekennzeichnet, dass**
die Erntegutprobe unmittelbar durch eine Öffnung (23) aus dem Emtegutstrom in der Erntemaschine (1) in die Verdichtungseinrichtung (24) geleitet wird.

16. Vorrichtung nach wenigstens einem der Ansprüche 12 bis 15,
**dadurch gekennzeichnet, dass**
die landwirtschaftliche Erntemaschine ein Feldhäcksler (1) mit einer Häckseltrommel (14) und einem daran befindlichen gutumlenkenden Trommelboden (15) ist und die Öffnung (23) an dem gutumlenkenden Trommelboden (15) angeordnet ist.

17. Vorrichtung nach wenigstens einem der Ansprüche 12 bis 16,
**dadurch gekennzeichnet, dass**
die Erntegutprobe aus der Verdichtungseinrichtung (24) mittels des beweglichen Verdichtungsorgans (25) in den Emtegutstrom der Erntemaschine (1) zurückgeführt wird.

18. Vorrichtung nach wenigstens einem der Ansprüche 12 bis 17,
**dadurch gekennzeichnet, dass**
die Probenkammer (34) und die Bewegungsrichtung des Verdichtungskolbens (25) in etwa in Förderrichtung (16) des Erntegutes im Bereich der Öffnung (23) ausgerichtet ist.

## Claims

1. A method of determining crop material parameters in an agricultural harvesting machine (1) with a compacting device (24) which can be filled with a crop material sample during the working process, wherein at least one crop material parameter of the crop material sample is determined in dependence on at least one defined precompacting of the crop material sample, that is produced by the compacting device (24), **characterised in that** the defined precompacting is determined on the basis of the compacting force (35) applied to the crop material sample.

2. A method according to claim 1 **characterised in that** the compacting device (24) includes at least one movable compacting member (25) and the defined precompacting of the crop material sample is determined on the basis of the compacting force (35) applied to the crop material sample by the compacting member (25).

3. A method according to at least one of claims 1 and 2 **characterised in that** the defined precompacting is adjustable in dependence on the crop material to be sensed.

4. A method according to at least one of claims 1 to 3 **characterised in that** the at least one crop material parameter is the volume of the crop material sample.

5. A method according to at least one of claims 1 to 4 **characterised in that** the at least one crop material parameter is the mass of the crop material sample.

6. A method according to at least one of claims 1 to 5 **characterised in that** the density of the crop material sample is determined from the volume and the mass of the crop material sample.

7. A method according to at least one of claims 1 to 6 **characterised in that** the at least one crop material parameter is a moisture value of the crop material sample and the moisture value is corrected on the basis of the density of the crop material sample.

8. A method according to at least one of claims 1 to 7 **characterised in that** at least one parameter related to the crop material sample such as precompacting, volume, mass, density or moisture content of the crop material sample and/or of the crop material is used for correcting or determining at least one further crop material parameter which is determined in the harvesting machine (1).

9. A method according to at least one of claims 1 to 8 **characterised in that** a yield measuring device is provided in the harvesting machine (1) and the crop material throughput and/or crop material yield determined by the yield measuring device is effected having regard to the determined density of the crop material sample.

10. A method according to at least one of claims 1 to 9 **characterised in that**
the agricultural harvesting machine (1) is a forage harvester with at least one intake roller (11) and a deflectably supported prepressing roller (12; 13) and includes at least one spring (20) for compacting the crop material conveyed between the at least one intake and prepressing roller (12; 13),
- the crop material throughput through the harvesting machine (1) is determined on the basis of the deflection (22) of the at least one prepressing roller (12; 13),
- during the compacting process for the crop material sample in the compacting device (24) the compacting force (35) and the associated volume of the crop material sample are determined,
- at least one ratio between the compacting force (35) and the volume is determined, and
- the at least one ratio is taken into consideration when determining the crop material throughput.

11. A method according to at least one of claims 1 to 10 **characterised in that** during filling of the compacting device (24) the compacting member (25) performs an oscillating movement with a reduced compacting action until defined precompacting of the crop material sample is achieved.

12. Apparatus for determining crop material parameters in an agricultural harvesting machine (1) with at least one compacting device (24) which can be filled with a crop material sample during the working process,
**characterised in that**
there is at least one sensor (30) for determining a defined precompacting of the crop material sample disposed in the compacting device (24).

13. Apparatus according to claim 12 **characterised in that** the compacting device (24) comprises at least one sample chamber (34) and a compacting piston (25) movable therein and the compacting force (35) applied by the compacting piston (25) is determined by at least one pressure sensor (30).

14. Apparatus according to at least one of claims 12 and 13 **characterised in that** the position of the compacting piston (25) in the sample chamber (34) is detected by at least one position sensor (29).

15. Apparatus according to at least one of claims 12 to 14 **characterised in that** the crop material sample is passed directly through an opening (23) from the crop material flow in the harvesting machine (1) into the compacting device (24).

16. Apparatus according to at least one of claims 12 to 15 **characterised in that** the agricultural harvesting machine is a forage harvester (1) with a chopper drum (14) and a material-deflecting drum plate (15) disposed thereat and the opening (23) is arranged at the material-deflecting drum plate (15).

17. Apparatus according to at least one of claims 12 to 16 **characterised in that** the crop material sample is fed back from the compacting device (24) into the crop material flow of the harvesting machine (1) by means of the movable compacting member (25).

18. Apparatus according to at least one of claims 12 to 17 **characterised in that** the sample chamber (34) and the direction of movement of the compacting piston (25) is oriented substantially in the conveyor direction (16) of the crop material in the region of the opening (23).

## Revendications

1. Procédé de détermination de paramètres de récolte dans une moissonneuse agricole (1), comportant une installation de compactage (24) pouvant être remplie pendant le processus de travail avec un échantillon de récolte, dans lequel
au moins un paramètre de récolte de l'échantillon de récolte est déterminé en fonction d'au moins un précompactage défini de l'échantillon de récolte généré par l'installation de compactage (24), **caractérisé en ce que** le précompactage défini est déterminé à l'aide de la force de compactage (35) introduite dans l'échantillon de récolte.

2. Procédé selon la revendication 1,
**caractérisé en ce que**
l'installation de compactage (24) contient au moins un organe de compactage mobile (25) et le précompactage défini de l'échantillon de récolte est déterminé à l'aide de la force de compactage (35) introduite dans l'échantillon de récolte par l'organe de compactage (25).

3. Procédé selon au moins l'une des revendications 1 ou 2,
**caractérisé en ce que**
le précompactage défini est réglable en fonction de la récolte à détecter.

4. Procédé selon au moins l'une des revendications 1 à 3,
**caractérisé en ce que**
l'au moins un paramètre de récolte est le volume de l'échantillon de récolte.

5. Procédé selon au moins l'une des revendications 1 à 4,
**caractérisé en ce que**
l'au moins un paramètre de récolte est la masse de l'échantillon de récolte.

6. Procédé selon au moins l'une des revendications 1 à 5,
**caractérisé en ce que**
la densité de l'échantillon de récolte peut être déterminée à partir du volume et de la masse de l'échantillon de récolte.

7. Procédé selon au moins l'une des revendications 1 à 6,
**caractérisé en ce que**
l'au moins un paramètre de récolte est une valeur d'humidité de l'échantillon de récolte et celle-ci est corrigé à l'aide de la densité de l'échantillon de récolte.

8. Procédé selon au moins l'une des revendications 1 à 7,
**caractérisé en ce qu'**
au moins un paramètre en liaison avec l'échantillon de récolte, comme le précompactage, le volume, la masse, la densité ou l'humidité de l'échantillon de récolte et/ou de la récolte, est utilisé pour corriger ou déterminer au moins un autre paramètre de récolte déterminé dans la moissonneuse (1).

9. Procédé selon au moins l'une des revendications 1 à 8,
**caractérisé en ce que**
dans la moissonneuse (1) une installation de mesure de rendement est présente et le débit de récolte et/ou rendement de récolte déterminé par l'installation de mesure de rendement s'effectue en tenant compte de la densité déterminée de l'échantillon de récolte.

10. Procédé selon au moins l'une des revendications 1 à 9,
**caractérisé en ce que**
la moissonneuse agricole (1) est une ramasseuse-hacheuse comportant au moins un rouleau d'amenée (11) et un rouleau de précompression (12, 13) monté de manière à pouvoir être dévié et contient au moins un ressort (20) pour compacter la récolte transportée entre l'au moins un rouleau d'amenée et de précompression (12, 13),
- à l'aide de la déviation (22) de l'au moins un rouleau de précompression (12, 13) le débit de récolte est déterminé par la moissonneuse (1),
- pendant le processus de compactage de l'échantillon de récolte dans l'installation de compactage (24), la force de compactage (35) et le volume correspondant de l'échantillon de récolte sont déterminés,
- au moins un rapport entre la force de compactage (35) et le volume est déterminé et
- l'au moins un rapport est pris en compte lors de la détermination du débit de récolte.

11. Procédé selon au moins l'une des revendications 1 à 10,
**caractérisé en ce que**
l'organe de compactage (25) réalise pendant le remplissage de l'installation de compactage (24) un mouvement oscillant avec un effet de compactage réduit jusqu'à ce qu'un précompactage défini de l'échantillon de récolte soit atteint.

12. Dispositif de détermination de paramètres de récolte dans une moissonneuse agricole (1), comportant au moins une installation de compactage (24) pouvant être remplie pendant le processus de travail avec un échantillon de récolte,
**caractérisé en ce qu'**
au moins un capteur (30) est présent pour déterminer un précompactage défini de l'échantillon de récolte se trouvant dans l'installation de compactage (24).

13. Dispositif selon la revendication 12,
**caractérisé en ce que**
l'installation de compactage (24) se compose d'au moins une chambre d'échantillon (34) et d'un piston de compactage (25) mobile à l'intérieur de celle-ci et la force de compactage (35) appliquée par le piston de compactage (25) est déterminée par au moins un capteur de pression (30).

14. Dispositif selon au moins une des revendications 12 ou 13,
**caractérisé en ce que**
la position du piston de compactage (25) dans la chambre d'échantillon (34) est détectée par au moins un capteur de position (29).

15. Dispositif selon au moins l'une des revendications 12 à 14,
**caractérisé en ce que**
l'échantillon de récolte est amené directement via une ouverture (23) du flux de récolte dans la moissonneuse (1) dans l'installation de compactage (24).

16. Dispositif selon au moins l'une des revendications 12 à 15,
**caractérisé en ce que**
la moissonneuse agricole est une ramasseuse-hacheuse (1) comportant un tambour de hachage (14) et un fond de tambour (15) déviant la récolte se trouvant sur celui-ci et l'ouverture (23) est disposée sur le fond de tambour (15) déviant la récolte.

17. Dispositif selon au moins l'une des revendications 12 à 16,
**caractérisé en ce que**
l'échantillon de récolte est ramené de l'installation de compactage (24) au moyen de l'organe de compactage mobile (25) dans le flux de récolte de la moissonneuse (1).

18. Dispositif selon au moins l'une des revendications 12 à 17,
**caractérisé en ce que**
la chambre d'échantillon (34) et la direction de mouvement du piston de compactage (25) sont orientées sensiblement dans la direction de transport (16) de la récolte dans la zone de l'ouverture (23).
